# EUROPÄISCHE PATENTSCHRIFT

(11) **EP 3 189 906 B1**
(45) Veröffentlichungstag und Bekanntmachung des Hinweises auf die Patenterteilung: **10.04.2019**
(21) Anmeldenummer: 16000029.5
(22) Anmeldetag: 11.01.2016
(51) Int. Cl.: B21C 37/12, B21D 51/00, B65D 88/08, B65D 90/02, E04H 7/06, E04H 7/30, B21D 51/18

(54) **VORRICHTUNG ZUM HERSTELLEN EINES ZYLINDRISCHEN BEHÄLTERS MIT GROSSEM DURCHMESSER, INSBESONDERE EINES SILOS**
DEVICE FOR MAKING A CYLINDRICAL CONTAINER WITH LARGE DIAMETER, IN PARTICULAR OF A SILO
DISPOSITIF DE PRODUCTION D'UN RECIPIENT CYLINDRIQUE DE GRAND DIAMETRE, EN PARTICULIER UN SILO

(43) Veröffentlichungstag der Anmeldung: 12.07.2017
(73) Patentinhaber: Lipp, Xaver, 73479 Ellwangen (DE)
(72) Erfinder: Lipp, Xaver, 73479 Ellwangen (DE)
(74) Vertreter: Clemens, Gerhard

(56) Entgegenhaltungen:
- EP-A2- 0 282 126
- WO-A1-2005/097374
- DE-A-102015 004 281
- US-A- 4 074 847

## Beschreibung

### TECHNISCHES GEBIET

Die vorliegende Erfindung betrifft eine Vorrichtung zum Herstellen eines zylindrischen Behälters mit großem Durchmesser, insbesondere eines Silos, aus einem auf einer Haspel aufgewickelten anschließend wendelförmig gebogenen Blechbandes mit einer auf dem Boden aufstellbaren Profiliereinrichtung mit Profilierstationen, die eine der Wandbiegung des zylindrischen Behältnisses entsprechend ausgebildete und versetzt verlaufende Bahn aufweist, der das Blechband zugeführt wird und die an den oberen Randbereich des zugeführten Blechbandes einen auskragenden Flansch anformt, einer auf den Boden aufstellbaren Drehantriebseinrichtung mit Drehantriebsstationen, einer Schweißeinrichtung, die unmittelbar nach oder an der Drehantriebseinrichtung zum Verschweißen eines benachbarten oberen und unteren Randbereichs des zugehörigen unteren und oberen Blechbandes angeordnet ist, einen auf den Boden aufstellbaren ringförmigen Montagerahmen, der in Abstand von seinem unteren Ende längs einer Schraubenlinie in Umfangsrichtung beabstandete Tragrollen an Tragstützen zur Unterstützung des Behälters an dem Kragflansch liegt, wobei die Bahn der Profiliereinrichtung neben der Bahn der durch die Tragrollen bestimmten Schraubenlinie verläuft und wobei die Anordnung der Drehantriebseinrichtung mit ihren Drehstationen und der Schweißeinrichtung mit der durch die Tragrollen bestimmten schraubenlinienförmigen Bahn übereinstimmt.

### STAND DER TECHNIK

Aus wendelförmig gebogenem Blechband hergestellte Behälter sind aus der DE 2 250 239 A oder der EP 1 181115 B1 bekannt. Zum Herstellen von Behältern wird dabei aus einem Blechband eine Wendel mit einem dem Behälterdurchmesser entsprechenden Durchmesser geformt. Bei der Herstellung eines derartigen Behälters werden die einander zugeordneten Wendelblechbandränder zunächst ausgebogen und anschließend auf der Außenseite des Behälters mittels eines Falzes fluiddicht miteinander verbunden. Hierzu werden die einander gegenüberliegenden Längsränder des Blechbandes jeweils U-förmig ausgebogen und die einander zugeordneten U-förmig ausgebogenen Blechränder werden ineinander gelegt und anschließend durch Falzen verbunden. Dieses System ist als Lipp-Doppelfalz-System am Markt bekannt und vielfältig bewährt. Durch dieses Lipp-Doppelfalz-System ist eine einfache und schnelle Herstellung der Behälter mit variablem Durchmesser und variabler Höhe möglich. Transportable Biegeblech- und Montagevorrichtungen gewährleisten, dass der Behälter an dem jeweiligen Aufstellungsort montiert werden kann und das Transportvolumen entsprechend reduziert werden kann.

Aus der DE 199 39 180 A1 ist bekannt, einen Behälter derart herzustellen, dass ein erster Randabschnitt unter Ausbildung einer wendelförmigen verlaufenden Ausbiegekante zur Außenseite hin ausgebogen wird und ein zweiter Randabschnitt des benachbart darüber angeordneten Blechbandes nach außen abgebogen wird und dann durch einen Falz mit einem ersten Randabschnitt verbunden wird.

Für die bisherigen Anwendungen dieses Behältersystems, beispielsweise zum Lagern von Schüttgütern aus der Land- und Forstwirtschaft oder von Bioabfall, weisen die Behälter eine ausgezeichnete Stabilität, Dichtheit und Medienresistenz auf. Für weitere Anwendungen wie beispielsweise die Lagerung von fluiden Medien, wie pflanzliche Öle, Erdöl oder dergleichen ist jedoch ein deutlich größeres Behältervolumen erforderlich, bei denen die Dichtheit zuverlässig gewährleistet werden muss. Die damit einhergehende erhöhte mechanische Stabilität der Behälter kann durch die bekannten Falzsysteme nicht ausreichend gewährleistet werden. Insbesondere stößt das Falzsystem bei großen Blechdicken an seine Grenzen.

Um wendelförmig aus gebogenem Blechband hergestellte Behälter bereit zu stellen, deren Anwendungsspektrum vergrößert ist, insbesondere bezüglich der Umsetzung eines großen Speichervolumens und/oder einer erhöhten mechanischen Stabilität unter Gewährleistung einer dennoch einfachen und schnellen Herstellbarkeit beziehungsweise Montage, wurden Lösungen entwickelt, die die Falzverbindung durch eine Schweißverbindung ersetzen.

Die WO 2014/048515 A1 offenbart einen Behälter, hergestellt aus einem wendelförmig gebogenen Blechband der eingangs beschriebenen Art, wobei die Randabschnitte der höhenmäßig übereinander verlaufenden benachbarten Randbereiche des Blechbandes über eine Schweißverbindung miteinander verbunden sind. Dabei überlappen sich die Randbereiche und werden durch zwei getrennte Schweißnähte fluiddicht miteinander verbunden. Durch den vorhandenen Abstand der Schweißnähte entsteht im Überlappungsbereich benachbarter Randbereiche des Blechbandes ein Spaltbereich zwischen den überlappenden Wandungen, der nach Herstellung des Behälters in nicht einfacher Art und Weise kontrollierbar ist bezüglich möglicher Korrosionsrisiken oder dergleichen.

Aus der DE 10 2015 004 281 A ist ein Behälter bekannt, der aus einem einlagig, wendelförmig gebogenen Blechband hergestellt ist, wobei die oberen und unteren aneinandergrenzenden Randbereiche des Blechbands beabstandet oder überlappend angeordnet sein können und diese Randbereiche durch eine erste Schweißnaht von der Außenseite des Behälters aufgebracht und mit einer zweiten Schweißnaht von der Innenseite des Behälters her aufgebracht miteinander verbunden sind, wobei beide Schweißnähte in ihrem Schweißgrund miteinander verschmolzen sind.

### DARSTELLUNG DER ERFINDUNG

Ausgehend von dem genannten Stand der Technik bezüglich der geschweißten Ausführung liegt der vorliegenden Erfindung die Aufgabe beziehungsweise das technische Problem zugrunde, eine Vorrichtung zum Herstellen eines zylindrischen Behälters der eingangs genannten Art bereit zu stellen, die das Anwendungsspektrum derartig hergestellter Behälter weiter vergrößert, insbesondere - unter Beibehaltung der wirtschaftlichen Herstellbarkeit vor Ort durch wendelförmige Blechbänder - gewährleistet, dass große Wandstärken für das Blechband verwendbar sind, die durch die bekannten Falzverfahren nicht umsetzbar sind, höchste Anforderungen an Reinheit, Medienresistenz und Dichtheit des Behälters erfüllt werden und eine dauerhaft zuverlässige Montage gewährleistet und die Umsetzung von Behältergrößen bezüglich Durchmesser und Höhe ermöglicht, die bisher nicht umsetzbar waren.

Die erfindungsgemäße Vorrichtung ist durch die Merkmale des unabhängigen Anspruchs 1 gegeben.

Vorteilhafte Ausgestaltungen und Weiterbildungen sind Gegenstand der von dem unabhängigen Anspruch 1 direkt oder indirekt abhängigen Ansprüche.

Die erfindungsgemäße Vorrichtung der eingangs genannten Art zum Herstellen eines zylindrischen Behälters mit großem Durchmesser, insbesondere eines Silos, zeichnet sich demgemäß dadurch aus, dass im Bereich der Drehantriebseinrichtung und/oder Schweißeinrichtung Mittel zum Einstellen der Höhenposition eines oberhalb des der Drehantriebseinrichtung und Schweißeinrichtung zugeführten oberen Blechbands zur Höhenposition des darunter verlaufenden mit dem oberen Randbereich zugeführten unteren Blechbandes zum Verschweißen des unteren Blechbandes und den unteren Randbereich des oberen Blechbandes vorhanden sind, so dass die Randbereiche von beabstandet bis überlappend anordenbar sind, und die Mittel zum Einstellen der Höhenposition zumindest eine Führungsrolle aufweisen, die unterhalb des Kragflansches des oberen Blechbandes abstützend vorhanden ist.

Durch das Vorsehen von Mitteln zum Einstellen der Höhenposition übereinanderliegender Blechbandrandbereiche im Bereich der Schweißeinrichtung lässt sich eine exakte Positionierung auch bei unterschiedlichsten Wandstärken und Schweißnahtdicken und Kragflanschausbildungen zum Herstellen qualitativ hochwertiger Schweißnähte mit hoher Festigkeit und Dichtigkeit dauerhaft und zuverlässig während der Montage des Behältnis umsetzen.

Eine weitere vorteilhafte Ausgestaltung, die eine sehr hohe Positioniergenauigkeit gewährleistet, ist dadurch gekennzeichnet, dass die Mittel zum Einstellen der Höhenposition zumindest ein Führungsrollenpaar mit in Höhenrichtung gegenüberliegenden Führungsrollen aufweist, die oberhalb beziehungsweise unterhalb des Kragflansches angeordnet sind.

Eine problemlose Anpassung an die unterschiedliche zu verarbeitende Blechbandstärken lässt sich gemäß einer bevorzugten Ausgestaltung dadurch umsetzen, dass die Höhenposition der Führungsrollen des Führungsrollenpaares relativ zueinander einstellbar ausgebildet ist.

Die Mittel zum Einstellen der Höhenposition können gemäß einer konstruktiv besonders einfach zu erstellenden und einzustellenden Konstruktion Gewindestangen mit Gewindestangenmuttern aufweisen, wobei in einer alternativen Ausgestaltung die Führungsrollen beispielsweise in Bereich eines verstellbaren, V-förmigen Hebelmechanismus oder Scherenmechanismus angeordnet sein können.

Die Positioniergenauigkeit benachbarter, miteinander zu verschweißender Randbereiche des Blechbandes wird weiterhin dadurch erhöht, dass die Mittel zum Einstellen der Höhenposition zwei in Umfangsrichtung beabstandet angeordnete Höheneinstellstationen aufweisen, die in der schraubenlinienförmigen Bahn liegen.

Ein kompakter Aufbau der Gesamtkonstruktion wird gemäß einer vorteilhaften konstruktiven Ausgestaltung dadurch umgesetzt, dass die Mittel zum Einstellen der Höhenposition oberhalb/auf der Drehantriebseinrichtung angeordnet sind, wobei es besonders vorteilhaft ist, die Konstruktion so auszugestalten, dass die Höheneinstellstationen jeweils auf der ersten und letzten Drehantriebsstation angeordnet sind.

Alternativ können die Mittel zum Einstellen der Höhenposition auch eine Bockeinheit aufweisen, an der die Führungsrollen höhenverstellbar angeschlossen sind.

Um die Stabilität und Positioniergenauigkeit während der Montage beziehungsweise des Verschweißvorgangs mit parallelem Drehvorgang zu gewährleisten, zeichnet sich eine besonders vorteilhafte Weiterbildung der erfindungsgemäßen Vorrichtung dadurch aus, dass die Mittel zum Einstellen der Höhenposition mittels einer Verspanneinheit miteinander verspannt sind, wobei eine bevorzugte stabile und konstruktiv einfach umzusetzende Ausführungsform eine Spannstange aufweist.

Mit der erfindungsgemäßen Vorrichtung können mit einfachsten konstruktiven Mitteln Schweißverbindungen zuverlässig umgesetzt werden, die kontinuierlich eine durchgehende homogene Schweißung gewährleistet, die eine einhergeht mit einer hohen Tragfähigkeit und Dichtheit und einer dauerhaft zuverlässigen Funktion. Gleichzeitig wird durch die erfindungsgemäße Vorrichtung die Montage und Herstellung von Behältern mit großer Wanddicke ermöglicht, so dass Behälter beziehungsweise Silos mit großen Abmessungen wirtschaftlich hergestellt und vor Ort montiert werden können.

Weitere Ausführungsformen und Vorteile der Erfindung ergeben sich durch die in den Ansprüchen ferner aufgeführten Merkmale sowie durch die nachstehend angegebenen Ausführungsbeispiele.

### KURZE BESCHREIBUNG DER ZEICHNUNG

Die Erfindung sowie vorteilhafte Ausführungsformen und Weiterbildungen derselben werden im Folgenden anhand der in der Zeichnung dargestellten Beispiele näher beschrieben und erläutert. Die der Beschreibung und der Zeichnung zu entnehmenden Merkmale können einzeln für sich oder zu mehreren in beliebiger Kombination erfindungsgemäß angewandt werden. Es zeigen:
- Fig. 1: schematische Seitenansicht eines Behälters mit einem wendelförmig gebogenen Blechband, der mit einer erfindungsgemäßen Vorrichtung hergestellt worden ist,
- Fig. 2: schematischer Detaillängsquerschnitt durch die Wandung des Behälters gemäß Fig. 1,
- Fig. 3: schematische Draufsicht auf eine Vorrichtung zum Herstellen des Behälters gemäß Fig. 1 und 2 aus einem wendelförmig gebogenen Blechband mit einer Haspel, einer Profiliereinrichtung, einer Steuereinrichtung, einer Drehantriebseinrichtung und einer Schweißeinrichtung, ohne Darstellung eines ringförmigen Montagerahmens,
- Fig. 4a: schematische Draufsicht auf die Vorrichtung gemäß Fig. 3 mit zusätzlichen in Umfangsrichtung um 90 ° verteilt angeordneten Zusatzdrehantrieben,
- Fig. 4b: schematische Ansichtsdarstellung der Zusatzdrehantriebe gemäß Fig. 4a,
- Fig. 5: schematische Detailausschnittsdraufsicht auf eine Vorrichtung im Bereich der Drehantriebs- und Schweißeinrichtung mit zusätzlicher Darstellung des ringförmigen Montagerahmens mit Tragstützen und Tragrollen,
- Fig. 6: stark schematisierte Detailquerschnittsdarstellung in Bereich der Drehantriebseinrichtung mit Führungsrollen und darüber angeordneter Höheneinstellstation mit Führungsrollen,
- Fig. 7a bis d: schematischer Detailquerschnitt im Randbereich übereinander angeordneter Blechbänder, die im unterschiedlichen Höhenniveau angeordnet sind mit durchgehender beidseitiger Schweißung (Fig. 7a und b) und mit Schweißverbindung mit Überlappung (Fig. 7c und d),
- Fig. 8: stark schematisierte Ansichtsdarstellung von Mitteln zum Einstellen der Höhenposition die über Gewindestangen und Gewindemuttern höhenmäßig einstellbare Führungsrollen aufweisen,
- Fig. 9: stark schematisierte Ansichtsdarstellung von Mitteln zum Einstellen der Höhenposition die Führungsrollen aufweisen, die im Endbereich eines verstellbaren V-Hebelmechanismus angeordnet sind und
- Fig. 10: ausschnittsweise in einer abgewickelten Ansicht und in einer ausschnittsweisen Draufsicht dargestelltes Ausführungsbeispiel eines ringförmigen Montagerahmens mit Tragstützen und Tragrollen.

### WEGE ZUM AUSFÜHREN DER ERFINDUNG

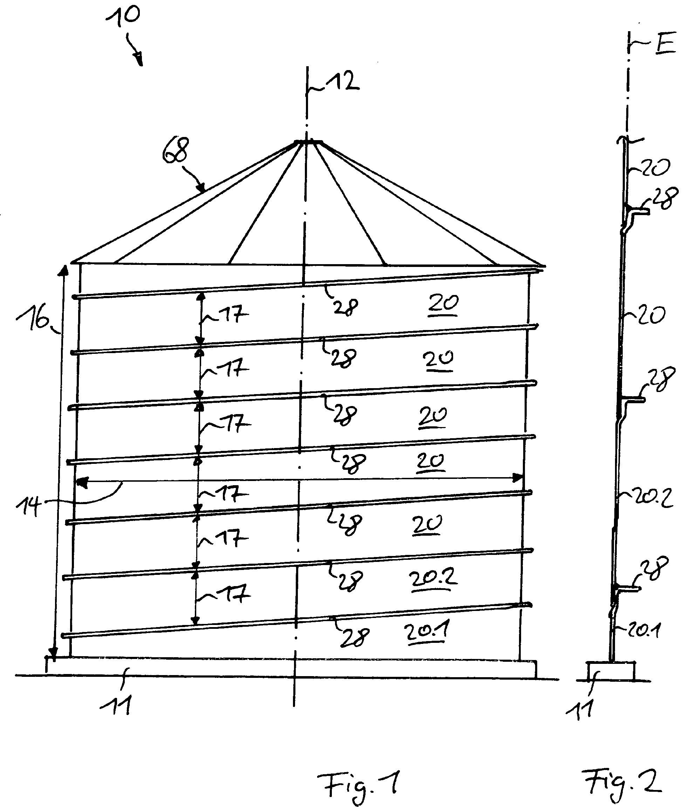

Die Fig. 1 zeigt eine Ansicht eines Behälters 10, wie er zum Aufbewahren von Schüttgütern aus der Land- und Forstwirtschaft, beispielsweise Getreide, Holzschnitzel oder Bioabfall, ebenso eingesetzt werden kann oder zum Speichern von Wasser, Abwasser oder Klärschlamm oder auch zum Speichern von Gas oder Erdöl. Der Behälter 10 ist auf seiner Außenseite und seiner Innenseite im Wesentlichen zylindrisch, insbesondere kreiszylindrisch, mit einer vertikal ausgerichteten Längsachse 12 ausgebildet. Der fertige Behälter 10 ist auf einem Fundament 11 gelagert und oberseitig mit einer kegel- oder kegelstumpfförmigen Dachkonstruktion 68 abgedeckt.

Die Herstellung des Behälters 10 erfolgt unter Verwendung eines wendelförmig gebogenen Blechbandes 20 vorzugsweise unmittelbar am Aufstellungsort des Behälters 10. Der Durchmesser 14 des Behälters 10 kann beispielsweise zwischen 4 m und 50 m oder mehr betragen. Die Höhe 16 des Behälters 10 kann zwischen 2 m und 40 m oder mehr betragen. Das Fassungsvolumen des Behälters 10 kann beispielsweise zwischen 15 m³ und 10.000 m³ betragen. Die vorzugsweise homogene Dicke des Blechbandes 20 beträgt zwischen 2 mm und 10 mm. Die Breite 17 des Blechbandes 20 kann zwischen 20 cm und 100 cm betragen, im dargestellten Ausführungsbeispiel beträgt die Breite 17 des Blechbandes 20 etwa 50 cm.

In Fig. 2 ist das Detail A von Fig. 1 im Verbindungsbereich dargestellt. Dargestellt ist jeweils der obere Randbereich 22 eines unteren Blechbandes 20.1 und eines in der Vertikalen oberseitig benachbarten oberes Blechband 20.2 mit unterem Randbereich 24 im unteren Bereich des Behälters 10. Beide Blechbänder 20.1, 20.2 sind in einer Ebene E wendelförmig verlaufend angeordnet, wobei die Ebene E die Mittelebene des Behälters 10 darstellt. Die darüber wendelförmig in der Ebene E verlaufenden Blechbänder sind mit dem Bezugszeichen 20 bezeichnet. Die Blechbänder 20.1, 20.2, 20 weisen jeweils einen zur Außenseite hin ausgebogenen Randabschnitt 22 auf, der einen Kragflansch 28 bildet.

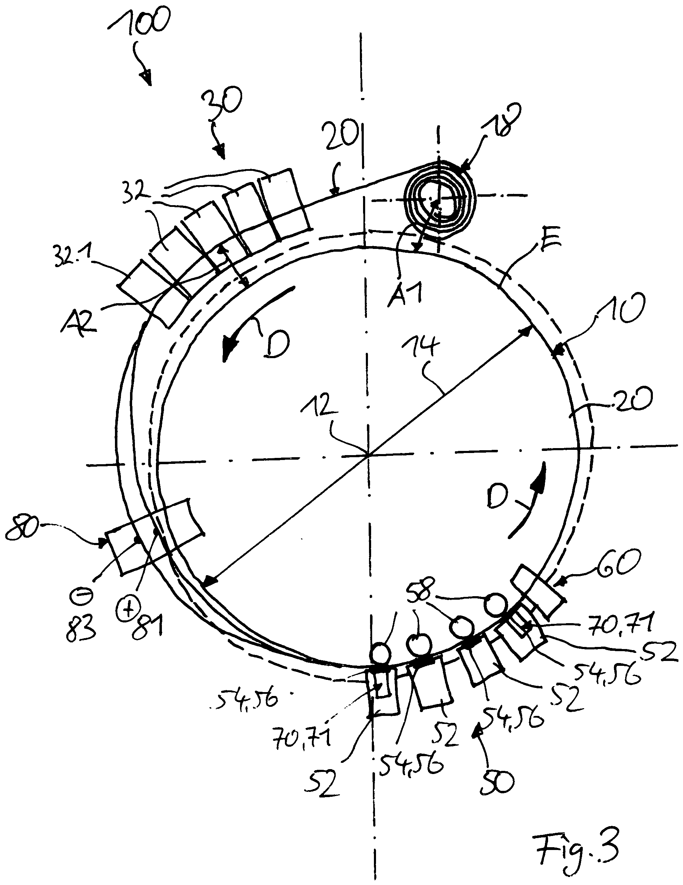

In Fig. 3 ist stark schematisiert eine Vorrichtung 100 zum Herstellen eines als Silo ausgebildeten Behälters 10 aus einem gekrümmt gewendelt verlaufenden Blechbandes 20 dargestellt. Die Vorrichtung 100 weist dabei folgende wesentliche Komponenten auf: Eine Haspel 18, auf der das Blechband 20 aufgewickelt und abziehbar vorhanden ist. Die Haspel 18 ist außerhalb (Abstand A1) der zylindrischen Ebene E des Behälters 10 angeordnet. Das von der Haspel 18 abgezogene Blechband 20 wird einer außerhalb (Abstand A2) des Behälters 10 angeordnete Profiliereinrichtung 30 zugeführt, die ebenfalls außerhalb der zylindrischen Ebene E beziehungsweise der Umfangslinie des Behälters 10 angeordnet ist und die aus mehreren in Umfangsrichtung hintereinander angeordneten Profilierstationen 32 besteht.

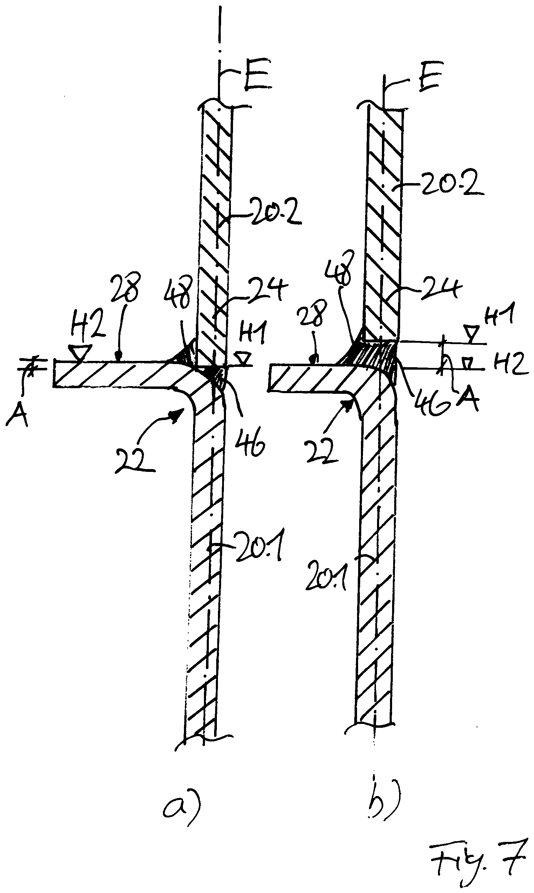

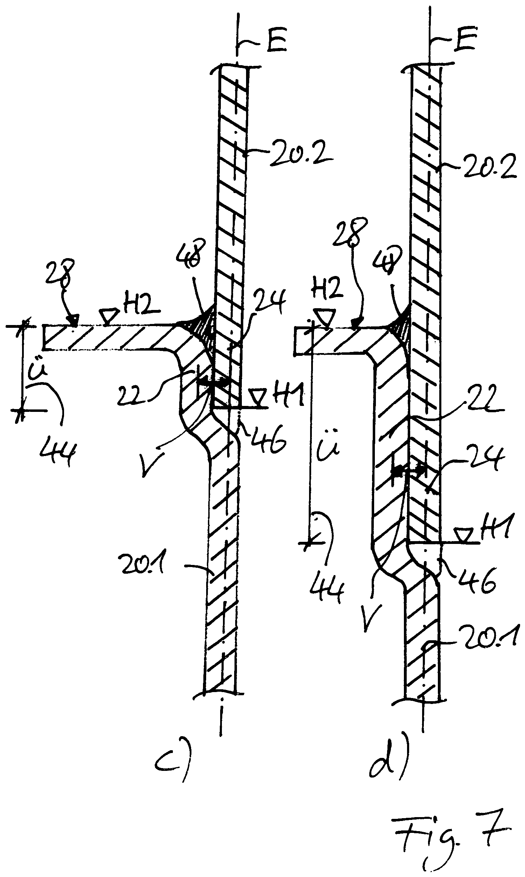

Die Profilierstationen 32 haben die Aufgabe den oberen Blechrandbereich des zugeführten Blechbandes 20 schrittweise plastisch zu verformen, so dass nach dem Durchlaufen der Profiliereinrichtung 30 im oberen Randbereich des Blechbandes ein nach außen weißender Kragflansch 28 (siehe beispielsweise Fig. 7a, b) angeformt ist oder alternativ neben der Ausbildung eines Kragflansches 28 daran anschließend ein nach außen versetzt zur Ebene E vorhandener und nach unten verlaufender Überlappungsbereich 44 mit der Länge Ü (siehe beispielsweise Fig. 7c, d) gebildet wird.

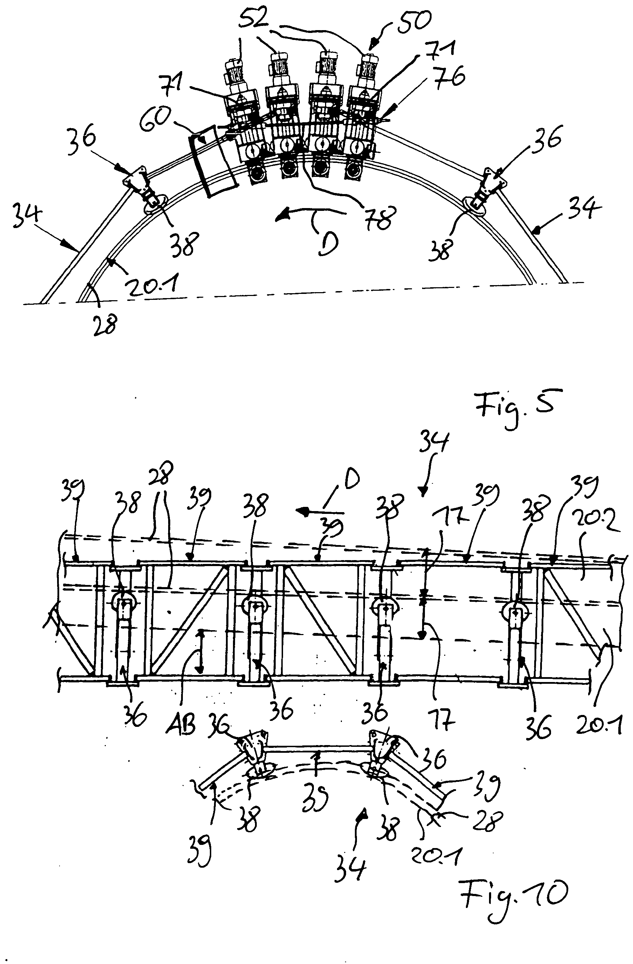

Weiterhin ist ein in Fig. 3 lediglich stark schematisiert und gestrichelt dargestellter ringförmiger Montagerahmen 34 vorhanden, der in Fig. 5 und 10 schematisch näher dargestellt ist. Der Montagerahmen 34 umgibt die zylindrische Ebene E des Behälters 10 nach außen versetzt und weist in Umfangsrichtung beabstandete Tragstützen 36 auf, die jeweils eine Tragrolle 38 besitzen, auf der sich der untere Rand des Kragflansches 28 des jeweils unteren Blechbandes 20.1 mit den jeweils darüber angeschlossenen Blechbändern 20.2, 20 abstützt, wobei die Tragrollen 38 in Umfangsrichtung gesehen in einer wendelförmigen Kurvenbahn (Schraubenlinie) angeordnet sind. Zwischen den Tragstützen 38, die mit dem Boden verschraubt sind, ist eine Aussteifungskonstruktion 39 mit Oberguten, Untergurten, Pfosten und Diagonalen angeschlossen. Der Abstand des unteren Randes des unteren Blechbandes 20.1 vom Boden ist mit AB bezeichnet. Über diesen Abstandsbereich kann man während der Montage in das Innere des Behälters 10 gelangen oder Material hindurch reichen.

Wie in Fig. 5 dargestellt ist die auf der ersten Drehantriebsstation 52 und die auf der letzten Drehantriebsstation 52 angeordnete Höheneinstellstation 71 mittels einer Verspanneinheit 76 miteinander verspannt, wobei die Verspanneinheit 76 im Ausführungsbeispiel als Spannstange ausgebildet ist. Dadurch wird eine höhere Stabilität der Vorrichtung 100 gewährleistet.

Nach dem Verlassen der Profiliereinrichtung 30 wird das bearbeitete Blechband 20.1 einer Drehantriebseinrichtung 50 mit nachgeordneter Schweißeinrichtung 60 zugeführt, wobei die Drehantriebseinrichtung 50 mehrere in Umfangsrichtung hintereinander angeordnete Drehantriebsstationen 52 aufweist und jede Drehantriebsstation 52 eine obere und untere Führungsrolle 54, 56 außenseitig aufweist zwischen denen der Kragflansch 28 in der wendelförmigen Kurvenbahn geführt ist, wobei jeweils gegenüberliegend innenseitig eine drehbare Andruckrolle 58 vorhanden ist. Sobald das Blechband 20 die Drehantriebseinrichtung 50 erreicht, befindet sich das Blechband 20 schraubenlinienförmig verlaufend in der zylindrischen Ebene E und bildet die Wandung des Behälters 10. Durch die Drehantriebseinrichtung 50 wird das Blechband 20 um die Längsachse 12 gedreht und wandert schraubenlinienförmig nach oben, so dass sich der in Fig. 1 dargestellte Behälter 10 in Form eines Silos ergibt. Gleichzeitig werden im Bereich unmittelbar nach der Drehantriebseinrichtung 50 durch die Schweißeinrichtung 60 der obere Randbereich 22 des unteren der Schweißeinrichtung 60 zugeführten Blechbandes 20.1 mit dem unteren Randbereich 24 des oberen zugeführten Blechbandes 20.2 miteinander verschweißt. Die Schweißung erfolgt dabei von außen. Zusätzlich kann auch noch eine Schweißnaht von innen angebracht werden. Die konstruktive Ausgestaltung der Schweißverbindung(en) ist in den Figuren 7a bis d dargestellt und wird weiter unten beschrieben.

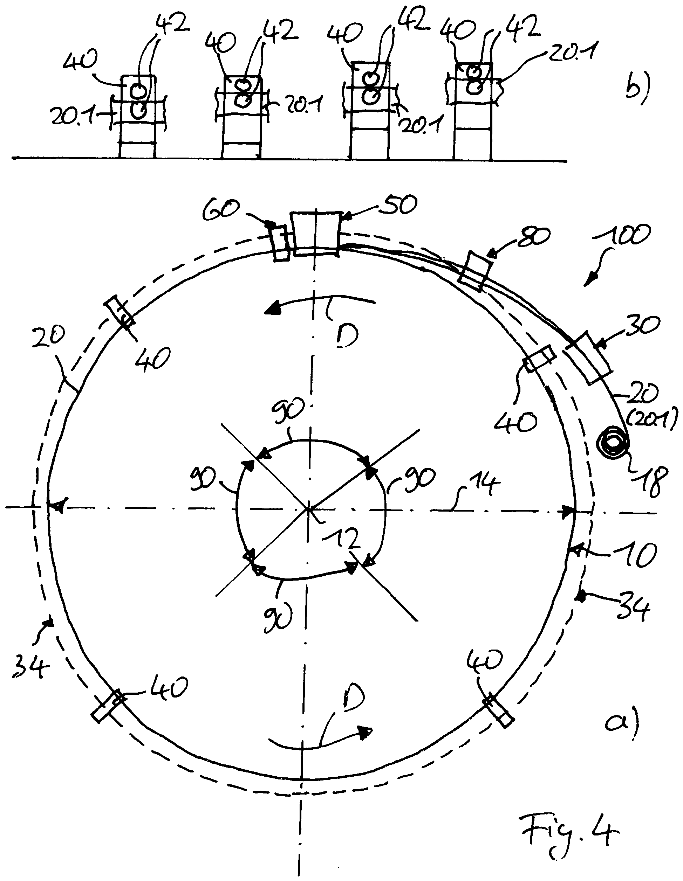

Die Darstellung der Vorrichtung 100 gemäß Fig. 4a entspricht im Wesentlichen dem Aufbau der Vorrichtung gemäß Fig. 3. Gleiche Bauteile trage dasselbe Bezugszeichen und werden nicht noch einmal erläutert. Zusätzlich sind in Fig. 4a noch Zusatzdrehantriebe 40 dargestellt, die in Umfangsrichtung in einem Umfangswinkel von 90 ° versetzt angeordnet sind und jeweils Antriebsrollenpaare 42 (siehe Fig. 4b) aufweisen zwischen denen der Kragflansch 28 des jeweils unteren Blechbandes 20.1 geführt ist. Diese Zusatzdrehantriebe 40 ermöglichen eine problemlose Herstellung von Behältern 10 mit sehr großen Gewichten. Die Zusatzdrehantriebe 40 können in ihrer Höhe unterschiedlich ausgebildet sein (siehe Fig. 4b), wobei die Antriebsrollenpaare 42 in ihrer Höhenposition einstellbar sind und gleichzeitig im Verlauf der schraubenlinienförmigen Bahn des Kragflansches 28 des Blechbandes 20.1 angeordnet sind.

In Fig. 3 und 4 ist zwischen der Profiliereinrichtung 30 und der Drehantriebseinrichtung 50 eine Steuereinrichtung 80 außenseitig angeordnet, die den Abstand des zugeführten Blechbandes 20 relativ zur kreiszylindrischen Ebene E des Behälters 10 detektiert und bei Überschreiten eines vorgegebenen Maximalwertes 81 oder bei Unterschreiten eines vorgegebenen Minimalwertes 83 die nicht näher dargestellten Antriebsaggregate der Profiliereinrichtung 30 und der Drehantriebseinrichtung 50 entsprechend ansteuert, so dass ein kontinuierliches positionsgenaues Zuführen des Blechbandes 20 zur Drehantriebseinrichtung 50 und damit zur Schweißeinrichtung 60 zum Herstellen einer kontinuierlich homogenen Schweißnaht gewährleistet ist.

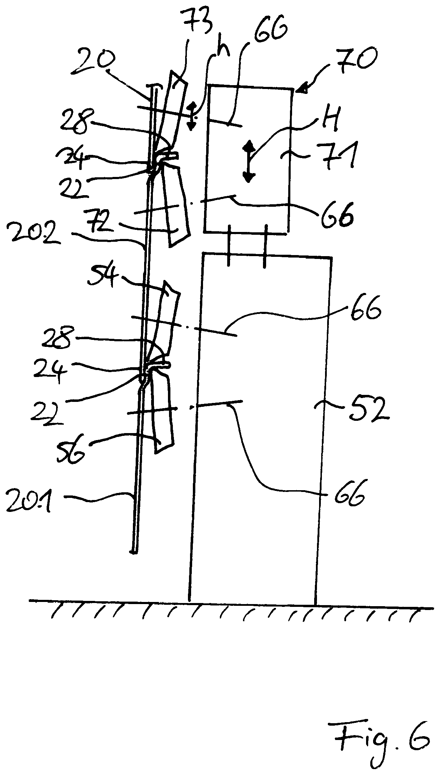

In Fig. 3 und in Fig. 6 sind stark schematisiert Mittel 70 zum Einstellen der Höhenposition des oberen Blechbandes 20.2 und der darüber verschweißt vorhandenen weiteren Blechbänder 20 relativ zum unteren zugeführten Blechbandes 20.1 dargestellt. Die Höhenposition des unteren zugeführten Blechbandes 20.1 im Bereich der Drehantriebseinrichtung 50 beziehungsweise der Drehantriebsstationen 52 ist durch die Höhenposition der unteren Führungsrolle 56 in Verbindung mit der oberen Führungsrolle 54 fest vorgegeben. Die Mittel 70 zum Einstellen der Höhenposition des oberen Blechbandes 20.2 und damit auch der darüber verlaufenden bereits miteinander verschweißten Blechbänder 20 weisen in den dargestellten Ausführungsbeispielen zwei Höheneinstellstationen 71 auf, die oberhalb der ersten und letzten Drehantriebsstation 52 angeordnet sind. Jede Höheneinstellstation 71 weist eine untere Führungsrolle 72 und eine obere Führungsrolle 74 auf, wobei der Kragflansch 28 zwischen den beiden Führungsrollen 72, 74 geführt ist. Die beiden Führungsrollen 72, 74 sind höhenverstellbar (Pfeil H in Fig. 6) an der Drehantriebsstation 52 vorhanden, so dass das zugeführte obere Blechband 20.2 bezüglich seiner Höhenposition relativ zum unteren zugeführten Blechbandes 20.1 höhenmäßig positioniert werden kann. Ausführungsbeispiele bezüglich der Positionierung in Verbindung mit der Ausbildung der Schweißnaht sind in den Figuren 7a bis d näher dargestellt. Des Weiteren ist jede Drehantriebsstation 52 so ausgebildet, dass die jeweilige Höhenposition der unteren Führungsrolle 56 relativ zur oberen Führungsrolle 54 einstellbar ist, so dass Kragflansche 28 mit unterschiedlicher Querschnittsdicke zwischen den Führungsrollen 54, 56 geführt werden können.

In den Figuren 7a bis d sind unterschiedliche mögliche Höhenpositionen des oberen Blechbandes 20.2 relativ zum unteren Blechband 20.1 dargestellt. In Fig. 7a ist im oberen Randbereich 22 des unteren Blechbandes 20.1 ein nach außen weisender Kragflansch 28 durch die Profiliereinrichtung 30 angeformt worden, dessen Höhenniveau oberseitig mit H2 bezeichnet ist. Der geradlinig verlaufende untere Randbereich 24 des oberen Blechbandes 20.2 weist mit seiner unteren Stirnkante ein Höhenniveau H1 auf, wobei die Stirnaußenkante der Stirnfläche außenseitig im Bereich der Krümmung des Kragflansches 28 auf diesem anliegt. Das Höhenniveau H1 unterscheidet sich von dem Höhenniveau H2 um das Abstandsmaß A. Bei dieser Ausgestaltung kann die Verbindung des oberen Randbereiches 22 des unteren Blechbandes 20.1 mit dem unteren Randbereich 24 des oberen Blechbandes 20.2 über eine innenseitige Schweißnaht 48 und eine gegenüberliegende außenseitige Schweißnaht 46 erfolgen.

Im Unterschied zur Darstellung gemäß Fig. 7a ist die Positionierung des oberen Blechbandes 20.2 relativ zum unteren Blechbandes 20.1 in Fig. 7b nach oben beabstandet (Abstandsmaß A1) durch die Höheneinstellstation 71 eingestellt, so dass die Anbringung von zwei beidseitig durchgeschweißten Schweißnähten 46, 48 mit einer größeren Schweißnahtdicke möglich ist.

In den Figuren 7c und d ist eine Verbindungskonstruktion zwischen oberen und unteren Blechband 20.1, 20.2 mittels einer außenseitigen Schweißnaht 48 (Fig. 7c) und wahlweise zusätzlich mit einer innenseitigen Schweißnaht (Fig. 7d) dargestellt, bei der ein Überlappungsbereich 44 beziehungsweise Ü zwischen dem unteren Randbereich 24 und oberen Randbereich 22 gegeben ist. Der Überlappungsbereich 44 des oberen Randbereiches 22 des unteren Blechbandes 20.1 ist dabei nach außen versetzt zur zylindrischen Ebene E nach unten anschließend an den nach außen weisenden Kragflansch 28 vorhanden, wobei der Versatz des Bereiches 44 nach außen im Wesentlichen der Blechdicke des Blechbandes 20.2 entspricht. Die innere Schweißnaht 46 ist gemäß Fig. 7d am unteren Endbereich des Überlappungsbereiches 44 angeordnet. Je nach Höhenpositionierung H1 des oberen Blechbandes 20.2 und entsprechender Ausbildung des Überlappungsbereiches 44, Ü sind unterschiedliche Überlappungslängen problemlos möglich. Die jeweilige Überlappungslänge kann durch entsprechende Positionierung der Führungsrollen 72, 74 der Höheneinstellstationen 71 von Fall zu Fall eingestellt werden.

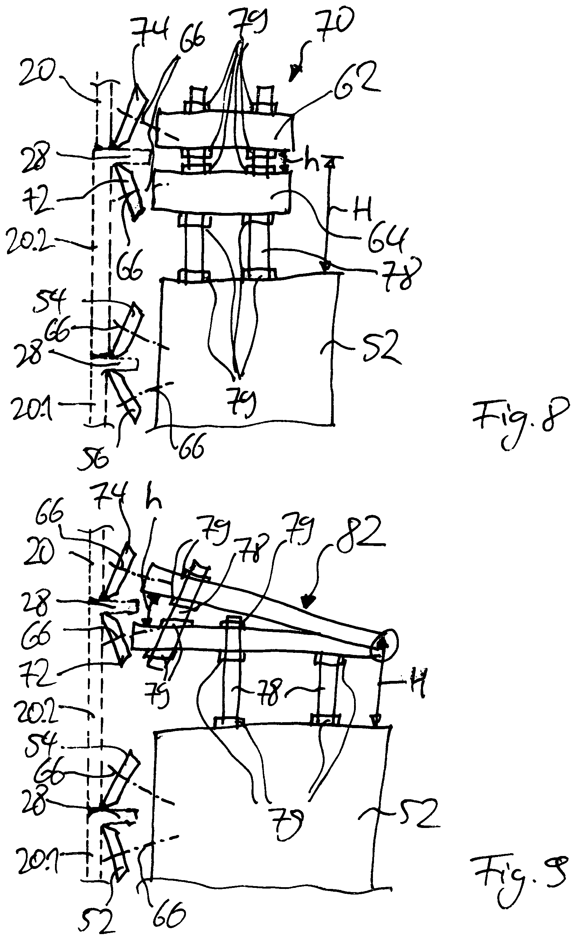

Fig. 8 zeigt stark schematisiert ein erstes Ausführungsbeispiel von Mitteln 70 zum Einstellen der Höhenposition des oberen Blechbandes 20.2. Die Höheneinstellstation 71 weist dabei eine schematisch dargestellte obere Lagereinheit 62 und eine untere Lagereinheit 64 auf, von denen jeweils die obere Führungsrolle 74 beziehungsweise die untere Führungsrolle 72 über eine geneigte Drehachse 66 drehbar angeschlossen ist. Die obere Lagereinheit und untere Lagereinheit 62, 64 sind über zwei durchgehende Gewindestangen 78 oberseitig an der Drehantriebsstation 52 angeschlossen, wobei jeweils ober- und unterseitig an der oberen und unteren Lagereinheit 62, 64 Gewindestangenmuttern 79 vorhanden sind. Die Höhenposition beider Führungsrollen 72, 74 und damit die Höhenposition des Kragflansches 28 des oberen Blechbandes 20.2 (Pfeil H) und damit die Höhenposition H2 des unteren Randbereiches 24 kann durch entsprechende Verdrehung der Gewindestangenmuttern 79 absolut eingestellt werden. Die relative Position beider Führungsrollen 72, 74 zueinander (Pfeil h) ist ebenfalls durch entsprechende Drehung der Gewindestangenmuttern 79 einstellbar. Auch die Ausbildung einer Scherenkonstruktion ist möglich.

Eine weitere mögliche konstruktive Ausgestaltung der Höheneinstellstation 71 ist in Fig. 9 stark schematisiert dargestellt. Diese Station ist als V-förmiger Hebelmechanismus 82 ausgebildet, wobei im Endbereich der beiden Hebel jeweils die untere Führungsrolle 72 beziehungsweise die obere Führungsrolle 74 über die Drehachse 66 drehbar angeschlossen ist und der Hebelmechanismus 82 als ganzes in seiner Höhenposition (Pfeil H) einstellbar ist und die relative Position der oberen Führungsrolle zur unteren Führungsrolle (Pfeil h) relativ zueinander einstellbar ist.

## Patentansprüche

1. Vorrichtung zum Herstellen eines zylindrischen Behälters (10) mit großem Durchmesser (14), insbesondere eines Silos, aus einem auf einer Haspel (18) aufgewickelten anschließend wendelförmig gebogenen Blechbandes (20) mit
- einer auf dem Boden aufstellbaren Profiliereinrichtung (30) mit Profilierstationen (32), die eine der Wandbiegung des zylindrischen Behältnisses (10) entsprechend ausgebildete und versetzt verlaufende Bahn aufweist, der das Blechband (20) zugeführt wird und die an den oberen Randbereich (22) des zugeführten Blechbandes (20) einen Kragflansch (28) anformt,
- einer auf den Boden aufstellbaren Drehantriebseinrichtung (50) mit Drehantriebsstationen (52),
- einer Schweißeinrichtung (60), die unmittelbar nach oder an der Drehantriebseinrichtung (50) zum Verschweißen eines benachbarten oberen mit einem unteren Randbereich (24, 22) des zugehörigen unteren und oberen Blechbandes (20.1, 20.2) angeordnet ist,
- einen auf den Boden aufstellbaren ringförmigen Montagerahmen (34), der in Abstand von seinem unteren Ende längs einer Schraubenlinie in Umfangsrichtung beabstandete Tragrollen (38) an Tragstützen (36) zur Unterstützung des Behälters (10) an dem Kragflansch (28) aufweist, wobei die Bahn der Profiliereinrichtung (30) neben der Bahn der durch die Tragrollen (36) bestimmten Schraubenlinie verläuft und wobei die Anordnung der Drehantriebseinrichtung (50) mit ihren Drehstationen (52) und der Schweißeinrichtung (60) mit der durch die Tragrollen (38) bestimmten schraubenlinienförmigen Bahn übereinstimmt,
- **dadurch gekennzeichnet, dass**
- im Bereich der Drehantriebseinrichtung (50) und/oder Schweißeinrichtung (60) Mittel zum Einstellen der Höhenposition (H2) des oberhalb der Drehantriebseinrichtung (50) und Schweißeinrichtung (60) zugeführten oberen Blechbands (20.2) zur Höhenposition (H1) des darunter verlaufenden mit dem oberen Randbereich (22) zugeführten unteren Blechbandes (20.1) zum Verschweißen des unteren Blechbandes (20.1) und des unteren Randbereiches (24) des oberen Blechbandes (20.2) vorhanden sind, so dass die Randbereiche (22, 24) von beabstandet bis überlappend anordenbar sind, und
- die Mittel (70) zum Einstellen der Höhenposition (H2) zumindest eine Führungsrolle (72) aufweisen, die unterhalb des Kragflansches (28) des oberen Blechbandes (20.2) abstützend vorhanden ist.

2. Vorrichtung nach Anspruch 1,
- **dadurch gekennzeichnet, dass**
- die Mittel (70) zum Einstellen der Höhenposition (H2) zumindest ein Führungsrollenpaar mit in Höhenrichtung gegenüberliegenden Führungsrollen (72, 74) aufweisen, die oberhalb beziehungsweise unterhalb des Kragflansches (28) angeordnet sind.

3. Vorrichtung nach Anspruch 2,
- **dadurch gekennzeichnet, dass**
- die Höhenposition der Führungsrollen (72, 74) des Führungsrollenpaars relativ zueinander einstellbar ausgebildet ist.

4. Vorrichtung nach einem oder mehreren der Ansprüche 1 bis 3,
- **dadurch gekennzeichnet, dass**
- die Mittel (70) zum Einstellen der Höhenposition (H2) Gewindestangen (78) mit Gewindestangenmuttern (74) aufweisen.

5. Vorrichtung nach Anspruch 2 oder 3,
- **dadurch gekennzeichnet, dass**
- die Führungsrollen (72, 74) jeweils im Endbereich eines verstellbaren V-förmigen Hebelmechanismus (82) oder Scherenmechanismus angeordnet sind.

6. Vorrichtung nach einem oder mehreren der vorstehenden Ansprüche,
- **dadurch gekennzeichnet, dass**
- die Mittel (70) zum Einstellen der Höhenposition (H2) zwei in Umfangsrichtung beabstandet angeordnete Höheneinstellstationen (71) aufweisen.

7. Vorrichtung nach einem oder mehreren der vorstehenden Ansprüche,
- **dadurch gekennzeichnet, dass**
- die Mittel (70) zum Einstellen der Höhenposition (H2) oberhalb/auf der Drehantriebseinrichtung (50) angeordnet sind.

8. Vorrichtung nach Anspruch 6 und 7,
- **dadurch gekennzeichnet, dass**
- die Höheneinstellstationen (71) jeweils auf der ersten und letzten Drehantriebsstation (52) angeordnet sind.

9. Vorrichtung nach einem oder mehreren der vorstehenden Ansprüche,
- **dadurch gekennzeichnet, dass**
- die Mittel (70) zum Einstellen der Höhenposition (H2) eine Bockeinheit aufweisen.

10. Vorrichtung nach einem oder mehreren der Ansprüche 6 bis 8,
- **dadurch gekennzeichnet, dass**
- die Mittel (70) zum Einstellen der Höhenposition (H2) mittels einer Verspanneinheit (76) miteinander verspannt sind.

11. Vorrichtung nach Anspruch 10,
- **dadurch gekennzeichnet, dass**
- die Verspanneinheit (76) eine Spannstange aufweist.

## Claims

1. Device for producing a cylindrical container (10) with a large diameter (14), in particular a silo, from a sheet-metal strip (20) which is wound up on a reel (18) and is subsequently bent helically, with
- a profiling device (30) which can be erected on the ground with profiling stations (32), the profiling device (30) having a path which is formed in the manner corresponding to the wall bend of the cylindrical container (10) and runs in an offset manner and to which the sheet-metal strip (20) is supplied and which forms a protruding flange (28) on the upper border region (22) of the supplied sheet-metal strip (20),
- a rotary drive device (50) which can be erected on the ground with rotary drive stations (52),
- a welding device (60) which is arranged directly downstream of or on the rotary drive device (50) for welding an adjacent upper border region to a lower border region (24, 22) of the associated lower and upper sheet-metal strip (20.1, 20.2),
- an annular mounting frame (34) which can be erected on the ground and, at a distance from its lower end, comprising supporting rollers (38), which are spaced apart in the circumferential direction along a helical line, on supports (36) for supporting the container (10) on the protruding flange (28), wherein the path of the profiling device (30) runs next to the path of the helical line determined by the supporting rollers (36), and wherein the arrangement of the rotary drive device (50) with its rotary stations (52) and the welding device (60) coincides with the helical-line-shaped path determined by the supporting rollers (38),
- **characterized in that**
- in the region of the rotary drive device (50) and/or welding device (60) there are means for adjusting the vertical position (H2) of an upper sheet-metal strip (20.2), which is supplied above the to the rotary drive device (50) and welding device (60), with respect to the vertical position (H1) of the lower sheet-metal strip (20.1), which runs
therebelow and is supplied with the upper border region (22), for welding the lower sheet-metal strip (20.1) and the lower border region (24) of the upper sheet-metal strip (20.2) such that the border regions (22, 24) can be arranged from spaced apart to overlapping, and
- the means (70) for adjusting the vertical position (H2) have at least one guide roller (72) which is present in a supporting manner below the protruding flange (28) of the upper sheet-metal strip (20.2).

2. Device according to Claim 1,
- **characterized in that**
- the means (70) for adjusting the vertical position (H2) has at least one pair of guide rollers with guide rollers (72, 74) which lie opposite in the vertical direction and are arranged above and below the protruding flange (28) .

3. Device according to Claim 2,
- **characterized in that**
- the vertical position of the guide rollers (72, 74) of the pair of guide rollers relative to each other is designed to be adjustable.

4. Device according to one or more of Claims 1 to 3,
- **characterized in that**
- the means (70) for adjusting the vertical position (H2) has threaded rods (78) with threaded rod nuts (74).

5. Device according to Claim 2 or 3,
- **characterized in that**
- the guide rollers (72, 74) are each arranged in the end region of an adjustable V-shaped lever mechanism (82) or scissors mechanism.

6. Device according to one or more of the preceding claims,
- **characterized in that**
- the means (70) for adjusting the vertical position (H2) have two vertical-adjustment stations (71) which are arranged spaced apart in the circumferential direction.

7. Device according to one or more of the preceding claims,
- **characterized in that**
- the means (70) for adjusting the vertical position (H2) are arranged above/on the rotary drive device (50).

8. Device according to Claims 6 and 7,
- **characterized in that**
- the vertical-adjustment stations (71) are in each case arranged on the first and final rotary drive station (52).

9. Device according to one or more of the preceding claims,
- **characterized in that**
- the means (70) for adjusting the vertical position (H2) have a stand unit.

10. Device according to one or more of Claims 6 to 8,
- **characterized in that**
- the means (70) for adjusting the vertical position (H2) are braced against one another by means of a bracing unit (76).

11. Device according to Claim 10,
- **characterized in that**
- the bracing unit (76) has a tie rod.

## Revendications

1. Dispositif de fabrication d'un récipient cylindrique (10) de grand diamètre (14), en particulier d'un silo, à partir d'une bande de tôle (20) enroulée sur un dévidoir (18) puis courbée en hélice, le dispositif comprenant
- un moyen de profilage (30) pouvant être placé sur le sol, muni de stations de profilage (32) et comportant une voie dont la forme correspond à celle de la courbure de paroi du récipient cylindrique (10), qui s'étend de manière décalée et à laquelle est amenée la bande de tôle (20) qui forme une bride en porte-à-faux (28) au niveau de la zone de bord supérieure (22) de la bande de tôle amenée (20),
- un moyen d'entraînement en rotation (50) qui peut être placé sur le sol et qui comprend des stations d'entraînement en rotation (52),
- un moyen de soudage (60) qui est disposé immédiatement en aval ou au niveau du moyen d'entraînement en rotation (50) pour souder une bande de tôle supérieure adjacente à une zone de bord inférieure (24, 22) de la bande de tôle supérieure et inférieure associée (20.1, 20.2),
- un cadre de montage annulaire (34) pouvant être placé sur le sol et se trouvant à distance de rouleaux de support (38), espacés de son extrémité inférieure le long d'une ligne hélicoïdale dans la direction circonférentielle, sur des consoles de support (36) destinées à supporter le récipient (10) au niveau de la bride en porte-à-faux (28), la voie du moyen de profilage (30) s'étendant à proximité de la voie de la ligne hélicoïdale définie par les rouleaux de support (36) et l'agencement du moyen d'entraînement en rotation (50) coïncidant avec ses stations de rotation (52) et celui du moyen de soudage (60) coïncidant avec la voie en forme d'hélice définie par les rouleaux de support (38),
- **caractérisé en ce que**
- il est prévu dans la zone du moyen d'entraînement en rotation (50) et/ou du moyen de soudage (60) des moyens de réglage de la position en hauteur (H2) d'une bande de tôle supérieure (20.2), amenée au moyen d'entraînement en rotation (50) et au moyen de soudage (60), par rapport à la position en hauteur (H1) de la bande de tôle inférieure (20.1) s'étendant au-dessous et amenée avec la zone de bord supérieure (22) pour souder la bande de tôle inférieure (20.1) et la zone de bord inférieure (24) de la bande en tôle supérieure (20.2) de sorte que les zones de bord (22, 24) peuvent être disposées d'une position espacée à une position de chevauchement, et
- les moyens (70) de réglage de la position en hauteur (H2) comportent au moins un rouleau de guidage (72) qui est situé au-dessous de la bride en porte-à-faux (28) de la bande de tôle supérieure (20.2).

2. Dispositif selon la revendication 1,
- **caractérisé en ce que**
- les moyens (70) de réglage de la position en hauteur (H2) comporter au moins une paire de rouleaux de guidage, les rouleaux de guidage (72, 74) étant opposés dans la direction de la hauteur et étant disposés au-dessus ou au-dessous de la bride en porte-à-faux (28).

3. Dispositif selon la revendication 2,
- **caractérisé en ce que**
- la position en hauteur des rouleaux de guidage (72, 74) de la paire de rouleaux de guidage l'un par rapport à l'autre est conçue pour être réglable.

4. Dispositif selon l'une au moins des revendications 1 à 3,
- **caractérisé en ce que**
- les moyens (70) de réglage de la position en hauteur (H2) comportent des tiges filetées (78) munies d'écrous (74) .

5. Dispositif selon la revendication 2 ou 3,
- **caractérisé en ce que**
- les rouleaux de guidage (72, 74) sont disposés chacun dans la zone d'extrémité d'un mécanisme de levier (82) en forme de V, ou d'un mécanisme à ciseaux, qui est déplaçable.

6. Dispositif selon l'une au moins des revendications précédentes,
- **caractérisé en ce que**
- les moyens (70) de réglage de la position en hauteur (H2) comportent deux stations de réglage en hauteur (71) espacées dans la direction circonférentielle.

7. Dispositif selon l'une au moins des revendications précédentes,
- **caractérisé en ce que**
- les moyens (70) de réglage de la position en hauteur (H2) sont disposés au dessus du moyen d'entraînement en rotation (50) ou sur celui-ci.

8. Dispositif selon les revendications 6 et 7,
- **caractérisé en ce que**
- les stations de réglage en hauteur (71) sont chacun disposés sur la première et la dernière station d'entraînement en rotation (52).

9. Dispositif selon l'une au moins des revendications précédentes,
- **caractérisé en ce que**
- les moyens (70) de réglage de la position en hauteur (H2) comportent une unité de support.

10. Dispositif selon l'une au moins des revendications 6 à 8,
- **caractérisé en ce que**
- les moyens (70) de réglage de la position en hauteur (H2) sont serrés ensemble au moyen d'une unité de serrage (76).

11. Dispositif selon la revendication 10,
- **caractérisé en ce que**
- l'unité de serrage (76) comporte une barre de serrage.
